# EUROPEAN PATENT SPECIFICATION

(11) **EP 2 678 203 B1**
(45) Date of publication and mention of the grant of the patent: **21.10.2020**
(21) Application number: 12749123.1
(22) Date of filing: 21.02.2012
(51) Int. Cl.: B60W 30/16, B60K 31/00, B60W 30/14, B60W 30/18, B60W 50/10, G01S 13/93, B60K 31/04, B60W 50/00, B60W 30/17

(54) **METHOD AND SYSTEM FOR CONTROL OF CRUISE CONTROL**
VERFAHREN UND SYSTEM ZUR STEUERUNG EINES GESCHWINDIGKEITSREGLERS
PROCÉDÉ ET SYSTÈME DE COMMANDE DE RÉGULATEUR DE VITESSE

(30) Priority: 23.02.2011 SE 1150150
(43) Date of publication of application: 01.01.2014
(73) Proprietor: Scania CV AB, 151 87 Södertälje (SE)
(72) Inventor: STAAF, Magnus, S-155 34 Nykvarn (SE); JOHANSSON, Oskar, S-112 19 Stockholm (SE); BREDBERG, Linus, 146 34 Tullinge (SE)
(74) Representative: Mötsch, Andreas
(86) International application number: PCT/SE2012/050185
(87) International publication number: WO 2012/115579

(56) References cited:
- EP-A1- 2 168 831
- WO-A1-2010/144028
- DE-A1-102005 001 929
- DE-A1-102008 039 950
- GB-A- 2 299 874
- US-A- 5 400 864
- US-A- 5 977 869
- US-A1- 2003 163 239
- US-A1- 2009 164 083
- US-A1- 2010 004 840
- US-A1- 2010 198 450
- US-A1- 2010 299 041

## Description

### Technical field

The present invention relates to a method for control of a cruise control according to the preamble of claim 1. The invention relates also to a system for control of a cruise control, a computer programme for applying the method, and a computer programme product.

### Background

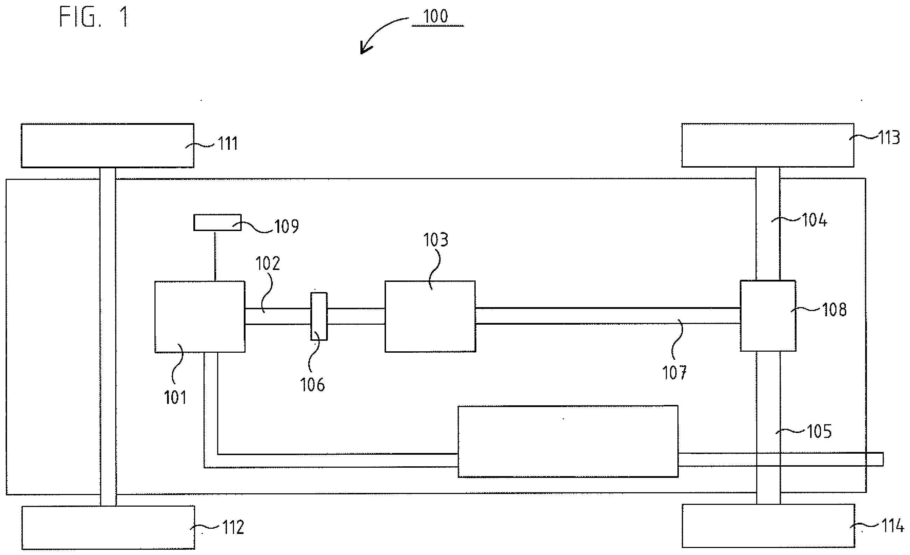

Figure 1 depicts schematically by way of example a vehicle 100, e.g. a car, truck, bus or the like. The vehicle 100 schematically depicted in Figure 1 has a forward pair of wheels 111, 112 and a rear pair of powered wheels 113, 114. The vehicle further comprises a power train with a propulsion system 101 which may for example comprise a combustion engine, an electric motor or a hybrid prime mover. The propulsion system 101 may be controlled by a cruise control 109 and may be connected in a conventional way, e.g. via an output shaft 102 from the propulsion system 101, to a gearbox 103, possibly via a clutch 106.

A shaft 107, which may be an output shaft from the gearbox 103, may drive the powered wheels 113, 114 via a final gear 108, e.g. a conventional differential, and driveshafts 104, 105 which are connected to said final gear 108. However, the powered wheels 113, 114 may also, e.g. where the propulsion system 101 comprises an electric motor, be connected directly to the propulsion system 101, i.e. with no intermediate clutch or gearbox.

Motor vehicles, e.g. cars, trucks and buses, are now usually provided with cruise control. An object of cruise control is to achieve a uniform predetermined vehicle speed. This is done either by adjusting the prime mover torque to avoid retardation or by applying brake action on downgrades where the vehicle is accelerated by its own weight. A more general purpose of cruise control is to provide convenient driving and more comfort for the vehicle's driver.

A driver of a motor vehicle with cruise control usually adopts a set speed vₛₑₜ as a speed which he/she wishes the vehicle to maintain on level roads. A cruise control then supplies the propulsion system with a reference speed v_{ref} which is used for controlling the prime mover 101. The set speed vₛₑₜ may therefore be regarded as an input signal to the cruise control, and the reference speed v_{ref} as an output signal from the cruise control, which is used for controlling the prime mover 101.

In certain cruise controls, the reference speed v_{ref} may be allowed to differ, within a certain speed range, from the set speed vₛₑₜ adopted by the driver, in order to save more fuel. An experienced driver using a vehicle without cruise control can reduce fuel consumption by adapting his/her driving to the characteristics of the road ahead, so that unnecessary braking and/or fuel-consuming acceleration can be avoided. There are now cruise controls which try to mimic the experienced driver's adaptive driving on the basis of knowledge of the road ahead, so that fuel consumption can be kept as low as possible, since this very greatly affects profitability for an owner of the vehicle, e.g. a haulage company or the like. Each of WO2010/144028, DE102008039950 A1 and EP2168831 shows an example of such cruise control.

An example of such a cruise control is a "look ahead" cruise control (LACC), i.e. an intelligent cruise control which uses knowledge of sections of road ahead, i.e. knowledge of the nature of the road, to determine the configuration of the reference signal. Knowledge of the road section ahead may for example comprise prevailing topology, road curvature, traffic situation, state of road and speed limits on the section ahead, and traffic signs beside the road. This knowledge may for example be obtained from location information, e.g. GPS (global positioning system) information, map information and/or topographical map information, and weather reports. All this knowledge may be used in various different ways. For example, knowledge of a speed limit on the road ahead may be used for fuel efficiency by lowering the vehicle's speed before a lower speed limit ahead. Similarly, information about a road sign conveying information about, for example, a roundabout or intersection ahead is also used to achieve fuel efficiency by braking before the roundabout or intersection.

An LACC cruise control does for example allow the reference speed v_{ref} to be raised before a steep climb to a level above the set speed vₛₑₜ, since the vehicle will presumably lose speed on the steep upgrade owing to its high train weight relative to prime mover performance. Similarly, the LACC cruise control allows the reference speed v_{ref} to drop to a level below the set-speed vₛₑₜ before a steep downgrade, since the vehicle will presumably be accelerated on such a downhill run by its high train weight. The concept here is that it is better from a fuel economy perspective to take advantage of the vehicle's acceleration by its own weight downhill than to initially accelerate before the downgrade and then brake downhill. The LACC cruise control can thus reduce fuel consumption without journey time being affected.

There are also cruise controls which use a current running resistance as a basis for deciding how the vehicle's speed should be varied. In other words, the reference speed v_{ref} in these cruise controls may be allowed to deviate from the set speed vₛₑₜ on the basis of at least one characteristic of the running resistance, e.g. its magnitude and/or pattern over time.

In this specification, the invention is exemplified for use in a cruise control system, e.g. a look-ahead cruise control (LACC), i.e. an intelligent cruise control which can use knowledge about the nature of the road ahead to control the reference speed v_{ref}. However, the invention may be implemented in substantially any cruise control in which the reference speed v_{ref} may be allowed to differ from the set speed vₛₑₜ.

A driver of a vehicle with LACC cruise control will find that the method raises and lowers the vehicle's speed in a way which is natural and acceptable in most driving situations. There are however, certain driving situations in which he/she will wish to prioritise a certain vehicle speed rather than fuel saving, so that the driving of the vehicle may be found intuitively natural and acceptable.

An example which may be cited is a situation in which a vehicle, e.g. a truck, with LACC cruise control relatively slowly catches up with another vehicle in front, e.g. another truck, which has either a traditional cruise control or no cruise control at all (i.e. its speed is controlled by, for example, an accelerator pedal), and a driver of the vehicle with the LACC cruise control intends to overtake the vehicle in front.

In this example, the vehicle with the LACC cruise control has a chosen set-speed vₛₑₜ which is higher, but not markedly higher, than the speed of the vehicle in front. This relationship between the vehicles' speeds means that the difference in speed between them will be greater when the vehicle with the LACC cruise control regulates the reference speed v_{ref} so that it is above the set speed vₛₑₜ, e.g. when the reference speed v_{ref} is increased before an imminent steep climb. Similarly, the relationship between the vehicles' speeds results in the difference in speed between them decreasing, or in the speed of the vehicle with LACC becoming lower than that of the vehicle in front, before an imminent steep downgrade, since the LACC cruise control will then cause the reference speed v_{ref} to be lower than the set speed vₛₑₜ.

For the vehicle with the LACC cruise control to be able to overtake the vehicle in front safely, i.e. to be able to complete the overtaking manoeuvre within a reasonable time, it might therefore in this example be necessary for the overtaking to take place just before a steep climb so that the speed difference may be great enough for the manoeuvre to be completed within this reasonable time. On the actual uphill run, however, the other vehicle needs to be heavier per horsepower for a sufficient speed difference to be maintained.

It is understandably not satisfactory for a driver of the vehicle with the LACC cruise control to be limited to certain specific situations or sections of road in order to be able to overtake safely without having to influence the LACC cruise control system.

Similar unsatisfactory characteristics of previous known cruise controls also affect a number of particular driving situations other than overtaking, as will be explained in more detail below.

### Brief description of the invention

An object of the present invention is to propose a form of control of a cruise control for overcoming the above problems. This object is achieved by the aforesaid method according to the appended claim 1. It is also achieved by the aforesaid system according to the appended claim 15. It is also achieved by the aforesaid computer programme and the aforesaid vehicle.

According to the present invention, a permissible deviation between the set speed *vₛₑₜ* and the reference speed *v_{ref}* for a cruise control is limited if a particular driving situation is detected on the basis of the way a driver drives the vehicle. A first limitation of the deviation is applied during the period *T_{S}* in which the particular driving situation detected prevails, and a second limitation of the deviation during a period *T_{A}* after the particular situation has ended.

Limitations are thus here applied to the cruise control's freedom to allow the reference speed *v_{ref}* to vary relative to the set speed *vₛₑₜ* during and immediately after a particular driving situation, thereby causing the driver to intuitively perceive the cruise control's function as good, since it mirrors the way an experienced driver would regulate the vehicle's speed if it did not have a cruise control.

As a non-limitative example of advantageous use of the present invention, the previously mentioned example may be cited of a vehicle with LACC cruise control, intending to execute an overtaking manoeuvre before a downhill run. As previously mentioned, the cruise control's LACC function may cause problems in overtaking before a downhill run in that the reference speed *v_{ref}* may then be lowered by the LACC function. The present invention would here result in the deviation allowed by the LACC function between the set speed *vₛₑₜ* and the reference speed *v_{ref}* being limited when it is detected that an overtaking manoeuvre is about to take place. For example, the deviation may here be limited both during the particular driving situation of overtaking and during a period *T_{A}* after the overtaking manoeuvre so that lowering of reference speeds v_{ref} to levels below the set speed *vₛₑₜ* is barred, thereby preventing the cruise control from lowering the reference speed *v_{ref}* in such a way that the overtaking manoeuvre might become problematical. In other words, the LACC function's control of the cruise control during the period *T_{S}* before and immediately after the time of the particular situation is limited.

This method is perceived by the driver as the cruise control and consequently the vehicle behaving intelligently and understanding his/her wishes for the driving of the vehicle. This reduces also the risk of the driver disconnecting the cruise control's LACC function, thereby also reducing the risk that the vehicle might be driven in a less fuel-efficient way.

According to an embodiment of the invention, at least one of the first and second limitations will cause the cruise control to have a function according to a traditional cruise control, i.e. with substantially no difference between the set speed *vₛₑₜ* and the reference speed *v_{ref}.*

According to various embodiments of the invention, a variety of different direct or indirect indications may be used to detect at least one particular driving situation. A non-limitative example of such an indirect indication is a vehicle speed demanded by an acceleration control, e.g. an accelerator pedal, being above or equal to the reference speed *v_{ref}* from the cruise control, which may be interpreted as a particular driving situation, e.g. an imminent overtaking manoeuvre or ongoing entry slip acceleration. When such a particular driving situation is detected, the invention applies a first limitation of the deviation between the set speed *vₛₑₜ* and the reference speed *v_{ref}* during the period *T_{S}* in which the actual situation is ongoing, and then a second limitation of the deviation during a subsequent period *T_{A}*. This makes it possible for the particular driving situation to be conducted efficiently and safely.

### Brief list of drawings

The invention is explained in more detail below with reference to the attached drawings, in which the same reference notations are used for similar items, and in which:
Figure 1 schematically depicts a vehicle;
Figure 2 is a flowchart of a method according to the present invention;
Figure 3 is a flowchart of a method according to the present invention;
Figure 4 depicts a control unit.

### Description of preferred embodiments

According to the present invention, a first limitation of a deviation between the reference speed *v_{ref}* and the set speed *vₛₑₜ* is applied if a particular driving situation is detected. This first limitation of the deviation is to be maintained throughout the particular driving situation detected, i.e. during the period *T_{S},* and a second limitation of the deviation is to be applied to the cruise control during a period *T_{A}* after the particular driving situation has ended. During the particular driving situation and the subsequent period *T_{A}*, an LACC cruise control is thus for example not allowed to vary the reference speed *v_{ref}* over the whole speed range within which it is normally allowed to vary, since such variation corresponding to the deviation is then limited in various ways.

In other words, the LACC function is thus temporarily at least partly paused, blocked or deactivated by the respective first and second limitations according to the invention. This may also be regarded as the control of the cruise control during and immediately after the particular driving situation having the effect of limiting the LACC function's full control by partly pausing, blocking or deactivating the LACC function. This selective pausing, blocking or deactivation of the LACC function results in the driver finding the vehicle's behaviour acceptable and experiencing good drivability.

The detection of the particular driving situation is based according to the present invention on the way the driver acts when driving the vehicle. The particular driving situation is therefore here detected by analysis of steps taken, inputs effected and/or manoeuvres executed by the driver and by comparison, i.e. correlation, of these steps and/or manoeuvres with a number of driving situations in order to determine which particular driving situation occurs at a particular point in time.

The detection of the particular driving situation is thus done by the present invention without the driver making any special input or taking any steps intended solely to indicate that the particular driving situation has arisen. In other words, the detection is based on at least one indirect indication of the driving situation, meaning an indication not directly intended to indicate the particular driving situation but taking the form of steps taken, manoeuvres executed and/or inputs effected by the driver during normal handling of the vehicle. Such steps, manoeuvres and/or inputs usable as indirect indications will be further exemplified below.

Detection of the end of a particular driving situation may likewise be based on indirect indications that the situation has ceased, i.e. on the way the driver acts while driving the vehicle. The end of the particular driving situation is thus here detected, e.g. as the end of an overtaking manoeuvre, in a similar way to the detection of the particular driving situation, by analysis of steps taken, inputs effected and/or manoeuvres executed by the driver and by comparison of these steps and/or manoeuvres with a number of driving situations in order to determine whether the particular driving situation has ended.

According to an embodiment of the invention, the particular driving situation comprises at least one from among overtaking, acceleration on, for example, an entry slip to a motorway, lane change, queue driving and driving on a road where there are one or more steep and/or narrow bends. According to an embodiment of the invention, the detection of the end of the particular driving situation comprises detecting that the overtaking manoeuvre, entry slip acceleration, lane change, queue driving or driving on roads where there are one or more steep and/or narrow bends has ended.

Possible overtaking problems were exemplified above. Similar problems may also occur when the vehicle 100 has to accelerate on an entry slip to a road where there is a relatively high maximum permissible speed, e.g. a motorway. Here the driver will want the vehicle 100 to accelerate even if there is a downhill run ahead, since he/she will not want the vehicle to be at too low a speed when joining the motorway. According to an embodiment of the invention, the permissible deviation between the reference speed *v_{ref}* and the set speed *vₛₑₜ* therefore needs to be limited during such entry slip acceleration.

Similarly, a driver of the vehicle 100 will want to be certain that it will not brake in front of other vehicles during lane change, this also being according to the invention such a particular driving situation during which certain limitations of the deviation between the reference speed *v_{ref}* and the set speed *vₛₑₜ* are applicable.

In queue driving and queue formation, a driver of the vehicle will want it to behave like other vehicles in the queue and not to be a cause of irritation. The vehicle has therefore to behave much like the others. Queue driving is thus according to the invention a particular driving situation for which the deviation has to be limited so that the reference speed *v_{ref}* is substantially not allowed to be above or below the set speed *vₛₑₜ.* The reference speed *v_{ref}* has here to be controlled to and aim towards the set speed *vₛₑₜ,* as in a traditional cruise control.

Another example of a particular driving situation is a main road on which there are one or more steep and/or narrow bends. Here and throughout this specification, steep bends means topographically steep bends, i.e. bends situated on steep upgrades or downgrades which are steep vertically. A steep upgrade may be defined as one where the vehicle will lose speed in a current gear despite extraction of maximum torque. Similarly, a steep downgrade may be defined as one where the vehicle will accelerate in a current gear despite the prime mover's drag torque. Here and throughout this specification, narrow bends means sharp bends, i.e. small-radius bends. A bend which is both steep and narrow is thus a sharp bend on a vertically steep uphill or downhill run.

For this particular driving situation it is not appropriate to raise the vehicle's speed above the set speed *vₛₑₜ*, which is accomplished according to an embodiment of the invention by applying a limitation of the deviation between the reference speed *v_{ref}* and the set speed *vₛₑₜ.* It may be mentioned here that a road with steep and narrow bends is typically unsuitable for a heavy vehicle which has its speed controlled by a cruise control unless the set speed *vₛₑₜ* is relatively low. It is for example inappropriate to raise the vehicle's speed when entering a steep and narrow bend.

As mentioned above, the detection of the particular driving situation is based on the way the driver acts when driving the vehicle, i.e. on one or more indirect indications of the driving situation, in the form of steps taken, manoeuvres executed and/or inputs effected by the driver during normal handling of the vehicle.
According to various embodiments of the present invention, a particular driving situation, e.g. an overtaking situation, may be detected by using at least one parameter which then serves as an indirect indication. Similarly, the at least one parameter may be used to detect that the particular driving situation has ended. The parameter is here analysed with a view to correlating it, i.e. comparing it, with a particular driving situation in order to decide whether it is or is not that particular driving situation.

According to an embodiment, such a parameter takes the form of a combination of location information, e.g. information from a GPS, and map data information. This combination may provide information about the type of road which the vehicle 100 is on, e.g. a motorway or some other type of road.
Another such parameter takes the form, according to an embodiment, of comparing an indicated set speed vₛₑₜ with a reference speed *v_{ref}* and said vehicle's actual speed, making it possible to detect an entry slip acceleration or the beginning of an overtaking manoeuvre.

Another such parameter takes the form, according to an embodiment, of using flashers. These are used in connection with various particular driving situations according to the invention, so they are usable for detecting such situations. For example, a driver normally flashes when beginning to overtake or about to change lanes.

Another such parameter according to an embodiment takes the form of comparing whether a speed demanded from an acceleration control, e.g. an accelerator pedal, is greater than or equal to said reference speed *v_{ref}.* If the torque/speed demanded by the accelerator pedal exceeds that demanded by cruise control, this is a clear indication that there is a particular driving situation. This may be regarded as an override of the cruise control's function by the driver using the acceleration control to demand from the propulsion system 101 more torque than is demanded by the cruise control. A typical example of where this occurs is when an overtaking manoeuvre commences or an entry slip acceleration is applied, which is then usable for detecting the particular driving situations in the form of overtaking and/or entry slip acceleration.

Another such parameter takes the form, according to an embodiment, of comparing a steering wheel deflection with the curvature of the respective section of road, which may show whether a lane change is about to take place, which may be an indication of, for example, a lane change or an overtaking manoeuvre.

Another such parameter takes the form, according to various embodiments, of determining lateral movements by means of location information, e.g. GPS, or information by means of a yaw sensor, a sideways accelerometer or radar information, e.g. information from an adaptive cruise control (ACC).

Another such parameter takes the form, according to an embodiment, of determining a lane change by use of lane departure warning (LDW).

Another such parameter takes the form, according to an embodiment, of increasing the set speed *vₛₑₜ* in combination with one or more of the above parameters. The set speed *vₛₑₜ* is typically altered by driver input, often by pressing a "+" button one or more times when such increase is desired.

Another such parameter takes the form, according to an embodiment, of at least one from among the parameters of vehicle speed, variation of vehicle speed, foot braking applied by driver, supplementary braking applied by driver and rate of change of a set speed *vₛₑₜ.* For example, one or more of these parameters may be used to detect the aforesaid particular driving situation of a main road with steep and/or narrow bends, a situation in which it is not appropriate to raise the vehicle speed over a predetermined value.

Limitations of the deviation between the set speed *vₛₑₜ* and the reference speed *v_{ref}* may be applied in a number of ways according to various embodiments of the present invention. According to an embodiment of the invention, at least one of the first and second limitations is so configured as to prevent the reference speed *v_{ref}* from being lower than the set speed *vₛₑₜ.* The deviation is thus here allowed to be such that the reference speed *v_{ref}* is equal to or higher than the set speed *vₛₑₜ.*

This limitation of the deviation is very applicable for example in the particular driving situation of overtaking. As described above, the function of an LACC cruise control may cause problems when overtaking a vehicle in front, since the LACC cruise control may well lower the reference speed *v_{ref}* before, for example, a crest of a hill which is followed by a downgrade, potentially causing the actual overtaking manoeuvre to proceed very slowly and resulting in both a traffic hazard and a source of irritation to the driver and to other vehicles.

When overtaking before a downgrade, the driver of the vehicle with the LACC cruise control will not wish to lower its reference speed v_{ref} before the crest because the information about the road section ahead indicates that the crest will be followed by a downgrade on which the vehicle will of itself accelerate to a higher speed. Instead, the driver will here want assurance that during the overtaking manoeuvre the vehicle will maintain a specific speed, e.g. 80 km/h, if he/she does not discontinue the overtaking manoeuvre or exceed the set speed *vₛₑₜ*, e.g. by depressing the accelerator pedal. The permissible deviation between the set speed *vₛₑₜ* and the reference speed *v_{ref}* has therefore to be limited so that the reference speed *v_{ref}* will not be below the set speed *vₛₑₜ* during the overtaking manoeuvre, nor during a period *T_{A}* after the manoeuvre. This is achieved by this embodiment of the invention.

According to another embodiment of the present invention, at least one of the first and second limitations of the permissible deviation between the set speed *vₛₑₜ* and the reference speed *v_{ref}* is so configured as to prevent the reference speed *v_{ref}* from being higher than the set speed *vₛₑₜ.* The deviation is thus here allowed only to be such that the reference speed *v_{ref}* is equal to or lower than the set speed *vₛₑₜ.* This embodiment of the present invention may with advantage be used in, for example, the particular driving situation of queue driving, i.e. in dense traffic. This embodiment of the invention may also with advantage be used in a particular driving situation in which a vehicle behind in which this embodiment of the invention is implemented identifies a vehicle in front, e.g. in an adjacent lane, which has substantially the same set speed vₛₑₜ and substantially similar speed suppositions as the vehicle behind. In the case for example of trucks, the train weight affects these speed suppositions.

The deviation from the set speed *vₛₑₜ* of the vehicle behind may here be limited so that the reference speed *v_{ref}* is prevented from being higher than the set speed *vₛₑₜ* even if the vehicle in front is temporarily outside the field of vision of the radar of the vehicle behind, or is aware of an imminent downgrade. According to this embodiment of the invention, a vehicle behind is prevented from accelerating by not having the vehicle in front in radar view. In other words, radar information makes the vehicle behind aware that the vehicle in front exists but is not close enough for the vehicle behind to be able to regulate its speed on the basis of the radar information about the vehicle in front. The fact that according to this embodiment the reference speed *v_{ref}* is prevented from being higher than the set speed *vₛₑₜ* means that an increase in the reference speed *v_{ref}* which would result in having to brake shortly afterwards when the vehicle behind catches up on the vehicle in front can be prevented.

According to another embodiment of the present invention, at least one of the first and second limitations takes the form of the permissible deviation between the set speed *vₛₑₜ* and the reference speed *v_{ref}* so that the reference speed *v_{ref}* is controlled to and aims at the set speed *vₛₑₜ*, which means that the permissible deviation is limited to being substantially non-existent, since the reference speed *v_{ref}* is substantially not allowed to be higher or lower than the set speed *vₛₑₜ.*

As mentioned above, the reference speed *v_{ref}* is used to control the prime mover 101. The actual speed of the vehicle 100 may of course differ from the reference speed *v_{ref},* but the control system for the prime mover 101 will endeavour to maintain an actual speed equal to the reference speed *v_{ref}.* In other words, in this embodiment of the invention, the cruise control functions during at least one part of the particular driving situation, viz. during the period *T_{S}* and during the subsequent period *T_{A}*, like a traditional cruise control, since the reference speed *v_{ref}* is substantially equivalent to the set speed *vₛₑₜ.* This may be very advantageous when, for example, overtaking on motorways.

According to an embodiment of the invention, the first limitation, which is applied during the period *T_{S},* i.e. during the actual particular driving situation, and the second limitation, which is applied during the period *T_{A}* after the particular driving situation, are substantially alike. Tables 1a and 1b illustrate a couple of such examples.

Table 1a depicts an example of a cruise control which works like an LACC cruise control during normal driving of the vehicle, i.e. at times other than the period *T_{S}* of a particular driving situation or a period *T_{A}* after such a particular driving situation. However, both of the respective first and second limitations result in substantially a traditional cruise control during the period *T_{S}* of the particular driving situation and the period *T_{A}* after the particular driving situation.

**Table 1a**

| Situation | Normal driving | Particular driving | Period *T_{A}* after |
|---|---|---|---|
| Deviation | situation | situation (period *T_{S}*) | particular driving situation |
| Raising of reference speed | Permissible | Not permissible | Not permissible |
| Lowering of reference speed | Permissible | Not permissible | Not permissible |

Table 1b depicts an example of a cruise control which works like an LACC cruise control during normal driving of the vehicle, i.e. at times other than the period *T_{S}* of a particular driving situation or a period *T_{A}* after such a particular driving situation. However, both during a particular driving situation and during a period *T_{A}* after such a particular driving situation, the respective first and second limitations result in a cruise control which is allowed to raise the reference speed *v_{ref}* above the value of the set speed *vₛₑₜ.*

During the period *T_{A}* after such a particular driving situation, lowering of the reference speed *v_{ref}* is not permissible. This may for example be advantageous when overtaking before a downgrade, where it is permissible for the set speed *vₛₑₜ* to be exceeded during the overtaking manoeuvre, but not for the reference speed *v_{ref}* to be lowered below the set speed *vₛₑₜ* during the period *T_{A}* immediately after the manoeuvre (on the downhill run) in order to avoid the vehicle braking immediately after the manoeuvre. Before the next downgrade it may then again be permissible to lower the reference speed *v_{ref}* below the set speed *vₛₑₜ.*

**Table 1b**

| Situation | Normal driving | Particular driving | Period *T_{A}* after particular |
|---|---|---|---|
| Deviation | situation | situation (period *T_{S}*) | driving situation |
| Raising of reference speed | Permissible | Permissible | Permissible |
| Lowering of reference speed | Permissible | Not permissible | Not permissible |

The respective embodiments exemplified in Table 1a and 1b are for example advantageous when overtaking a vehicle in front.

According to an embodiment of the invention, the first limitation, which is applied during the period *T_{S},* i.e. during the actual particular driving situation, and the second limitation, which is applied during the period *T_{A}* after the particular driving situation, are not alike. Table 2 illustrates such an example.

Table 2 depicts an example of a cruise control which works like an LACC cruise control during normal driving of the vehicle, i.e. at times other than the period *T_{S}* of a particular driving situation or a period *T_{A}* after such a particular driving situation. The first limitation during the period *T_{S}* of the particular driving situation results in substantially a traditional cruise control. The second limitation during the period *T_{A}* after the particular driving situation allows the reference speed *v_{ref}* to be raised above the value of the set speed *vₛₑₜ* but bars lowering of the reference speed *v_{ref}* below the value of the set speed *vₛₑₜ.* This embodiment may for example be advantageous in overtaking manoeuvres.

**Table 2**

| Situation | Normal driving | Particular driving | Period *T_{A}* after |
|---|---|---|---|
| Deviation | situation | situation (period *T_{S}*) | particular driving situation |
| Raising of reference speed | Permissible | Not permissible | Permissible |
| Lowering of reference speed | Permissible | Permissible | Not permissible |

The period *T_{A}* after the particular driving situation has ended, i.e. the period during which the second limitation of the deviation between the set speed *vₛₑₜ* and the reference speed *v_{ref}* is applied, corresponding to the last column in Tables 1a, 1b and 2, ends according to an embodiment of the invention when a reset condition is fulfilled, i.e. when a reset event occurs or a maximum permissible time *Tₘₐₓ* for the period *T_{A}* after the particular driving situation runs out. When this reset condition is fulfilled, the period *T_{A}* is thus regarded as ended and the second limitation is removed. Thereafter the cruise control is again allowed to have a deviation between the set speed *vₛₑₜ* and the reference speed *v_{ref}* in accordance the normal function of an LACC cruise control.

According to the invention, this period *T_{A}* after the cessation of the particular driving situation is instead regarded as ending when a predetermined time *T_{P}* has passed since a reset condition was fulfilled, i.e. a predetermined time *T_{P}* after a reset event has occurred or a maximum permissible time *T_{MAX}* for the period *T_{A}* after the particular driving situation has run out. When this period *T_{A}* has ended, i.e. when the predetermined time *T_{P}* has run out since the fulfilment of a reset condition, the second limitation of the deviation is therefore removed.

The aforesaid reset conditions comprise a variety of different possible conditions which may be used to indicate that the period *T_{A}* after the end of the particular driving situation has come to an end.

According to an embodiment, such a reset condition takes the form of a lane change being detected. Such detection of a lane change may use one or more parameters pertaining to lateral movements, e.g. parameters related to yaw sensor information, sideways accelerometer information, radar information, lane departure warning (LDW) information, location information and one or more comparisons between steering wheel deflection and road curvature.

Such a lane change will for example be regarded as an indication that a further overtaking manoeuvre is beginning, in which case the cruise control may revert to a normal LACC function, before substantially immediately changing to a function with a limitation of the deviation between the set speed *vₛₑₜ* and the reference speed *v_{ref}* which is related to the further overtaking manoeuvre. According to another embodiment, such a reset condition takes the form of detecting that an update of the set speed *vₛₑₜ* is effected, e.g. by input. The cruise control therefore reverts to a normal LACC function either immediately when the set speed *vₛₑₜ* is corrected or when a predetermined time *Tₚ* has passed since the set speed *vₛₑₜ* was corrected.
According to another embodiment of the invention, such a reset condition takes the form of detecting an input by a driver which is related to the reset. For example, the vehicle may be equipped with a button or other input means which may be adapted to receiving input which the system interprets as the cruise control having to revert to a normal LACC function.

According to another embodiment, such a reset condition takes the form of activation of a further cruise control function, e.g. a cruise control function which is based on radar and brakes the vehicle 100 if it comes too close to a vehicle in front. The cruise control therefore reverts here to a normal LACC function either immediately when the further cruise control function is activated or when a predetermined time *Tₚ* has passed since the further cruise control function was activated.

According to another embodiment, such a reset condition takes the form of detecting a further particular driving situation, e.g. a lane change. Here the cruise control reverts to a normal LACC function and then changes substantially immediately to a function with a limitation of the deviation between the set speed *vₛₑₜ* and the reference speed *v_{ref}* which is related to the further particular driving situation as above. The return to the LACC function may take place either immediately when the further particular driving situation is detected or when a predetermined time *Tₚ has* passed since the further driving situation was detected.

According to another embodiment of the invention, such a reset condition takes the form of a maximum permissible time *T_{MAX}* for the period *T_{A}* after the particular driving situation has ended. This therefore involves checking whether the period *T_{A}* has reached the maximum time it is allowed to run, and if such is the case a return to normal LACC function takes place.

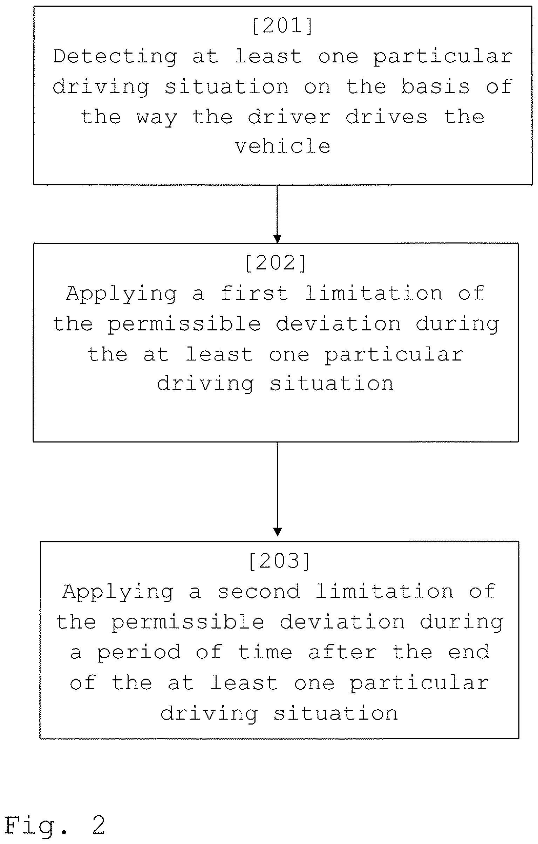

Figure 2 is a schematic flowchart for the method according to the present invention. As a first step 201 of the method, at least one particular driving situation, e.g. an overtaking manoeuvre, is detected on the basis of the way the driver acts when the vehicle is in motion, i.e. on the basis of indirect indications as described above.

As a second step 202, if at least one particular driving situation is detected in the first step 201, a first limitation of the permissible deviation between the set speed *vₛₑₜ* and the reference speed *v_{ref}* is applied during the period *Tₛ* in which the at least one driving situation is ongoing.

As a third step 203 of the method, a second limitation of the deviation between the set speed *vₛₑₜ* and the reference speed *v_{ref}* is applied for a period *T_{A}* after the at least one particular driving situation has ended. This second limitation may be identical with, or different from, the first limitation.

Thus according to the invention any type of limitation of the deviation between the set speed *vₛₑₜ* and the reference speed *v_{ref}* will be applied both during the period *Tₛ* of an ongoing particular driving situation and for a period *T_{A}* after that the particular driving situation.

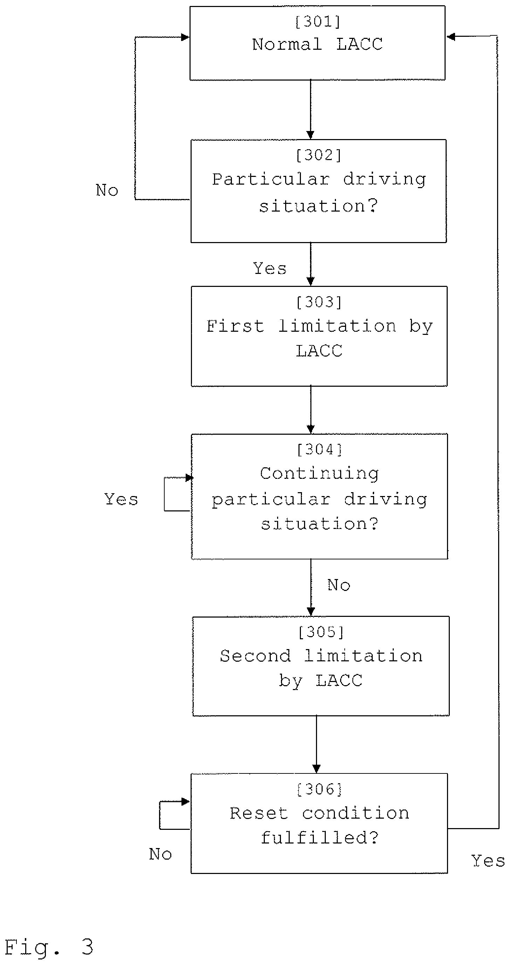

Figure 3 depicts a somewhat more detailed and implementation-oriented flowchart for a method according to the present invention. As a first step 301 of the method according to this flowchart, the cruise control of the vehicle 100 applies normal LACC cruise control, i.e. allowing deviation between the set speed *vₛₑₜ* and the reference speed *v_{ref}* on the basis of knowledge of road sections ahead. As described above, in the method's first step 301 the cruise control might also have allowed deviation based on, for example, a running resistance of the vehicle.

As a second step 302, the method detects whether there is a particular driving situation. If such is not the case, the method goes back to the first step 301. If there is a particular driving situation, the method moves on to a third step 303 in which a first limitation is applied to the permissible deviation between the set speed *vₛₑₜ* and the reference speed *v_{ref}.*

The method then moves on to a fourth step 304 in which it checks whether the particular driving situation is still ongoing. This check continues until it is found that the particular driving situation is no longer ongoing, whereupon the method moves on to a fifth step 305.

As the fifth step 305, a second limitation of the deviation between the set speed *vₛₑₜ* and the reference speed *v_{ref}* is applied and may be similar to, or different from, the first limitation. The method then moves on to a sixth step 306 in which it checks whether a reset condition is fulfilled. As described above, possible reset conditions comprise, for example, detecting a lane change, correcting a set speed *vₛₑₜ,* activating a further cruise control function, detecting a further particular driving situation or overrunning a maximum permissible period *T_{MAX}* for the time *T_{A}* after the end of the particular driving situation. If such a condition is fulfilled, e.g. if a lane change is detected, the method goes back to the first step 301, i.e. to normal LACC cruise control.

Checking whether a reset condition is fulfilled continues until a reset condition is fulfilled, comprising fulfilment of the condition of maximum permissible time *T_{MAX}* for the period *T_{A}* after the end of the particular driving situation.

An embodiment of the invention checks whether the condition of maximum permissible time *T_{MAX}* for the period *T_{A}* after the end of the particular driving situation is fulfilled by zeroing a timer when the method moves on to its fifth step 305, i.e. by setting a variable t to the value zero when the particular driving situation has ended. The variable t is then incremented at each check on whether any reset condition is fulfilled, making it possible for the variable t to be used to check whether the condition of maximum permissible time *T_{MAX}* for the period *T_{A}* after the end of the particular driving situation has or has not been reached. Specialists will appreciate that this checking of the condition of maximum permissible time *T_{MAX}* may be effected in various different ways.

Specialists will appreciate that the method for control of a cruise control according to the present invention may also be implemented in a computer programme which, when executed in a computer, causes the computer to apply the method. The computer programme usually takes the form of a computer programme product 403 stored on a digital storage medium, and is contained in such a product's computer-readable medium which comprises a suitable memory, e.g. ROM (read-only memory), PROM (programmable read-only memory), EPROM (erasable PROM), flash memory, EEPROM (electrically erasable PROM), a hard disc unit, etc.

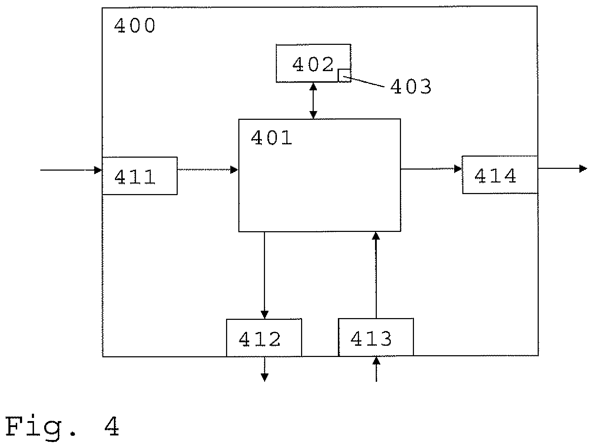

Figure 4 depicts schematically a control unit 400 comprising a calculation unit 401 which may take the form of any suitable type of processor or microcomputer, e.g. a circuit for digital signal processing (digital signal processor, DSP), or a circuit with a predetermined specific function (application specific integrated circuit, ASIC). The calculation unit 401 is connected to a memory unit 402 which is situated in the control unit 400 and which provides the calculation unit with, for example, the stored programme code and/or stored data which the calculation unit needs to enable it to do calculations. The calculation unit 401 is also adapted to storing partial or final results of calculations in the memory unit 402.

The control unit 400 is further provided with respective devices 411, 412, 413, 414 for receiving and sending input and output signals. These input and output signals may comprise waveforms, pulses or other attributes which the input signal receiving devices 411, 413 can detect as information and which can be converted to signals processable by the calculation unit 401. These signals are thereafter conveyed to the calculation unit 401. The output signal sending devices 412, 414 are arranged to convert signals received from the calculation unit 401 in order, e.g. by modulating them, to create output signals which can be transferred to other parts of the system for controlling the cruise control.

Each of the connections to the respective devices for receiving and sending input and output signals may take the form of one or more from among a cable, a data bus, e.g. a CAN (controller area network) bus, an MOST (media oriented systems transport) bus or some other bus configuration, or a wireless connection. Specialists will appreciate that the aforesaid computer may take the form of the calculation unit 401 and that the aforesaid memory may take the form of the memory unit 402.

According to an aspect of the invention, the present invention relates also to a system for control of a cruise control. As described above, the cruise control is adapted to supplying a reference speed *v_{ref}* for control of a propulsion system 101, wherein said reference speed *v_{ref}* is based on a set speed *vₛₑₜ* chosen by a driver of a vehicle 100 provided with said propulsion system 101, whereby deviation between the reference speed *v_{ref}* and the set speed *vₛₑₜ* may be allowed, e.g. based on knowledge of road sections ahead or on running resistance.

The system comprises a detection means for detecting at least one particular driving situation. This detection means is adapted to basing detection on the aforesaid indirect indications, i.e. on how the driver acts when driving vehicles.

The system comprises also a limitation means adapted to applying a first limitation of the permissible deviation during the period *Tₛ* for the at least one particular driving situation detected. As described above, this first limitation may for example mean the reference speed *v_{ref}* not being allowed to be below the set speed *vₛₑₜ.* The limitation means is further adapted to applying a second limitation of the permissible deviation during a period *T_{A}* after the end of the at least one particular driving situation, in which said period *T_{A}* ends when a reset condition is fulfilled or a predetermined time *Tₚ* after a reset condition has been fulfilled, after which it is again possible for said cruise control to allow said deviation between said reference speed *v_{ref}* and said set speed *vₛₑₜ.* As described above, the second limitation may be similar to, or different from, the first limitation.

Specialists will appreciate that the system may be modified according to the various embodiments of the method according to the invention. One embodiment relates to a motor vehicle 100, e.g. a car, truck or bus, provided with at least one system for control of a cruise control according to the invention.

The present invention is not restricted to its embodiments described above but relates to and comprises all embodiments within the protective scope of the attached independent claims.

## Claims

1. A method for control of a cruise control (109), whereby said cruise control (109) supplies a reference speed v_{ref} for control of a propulsion system (101), said reference speed v_{ref} is based on a set speed vₛₑₜ chosen by a driver of a vehicle (100) provided with said propulsion system (101), and it is possible for said cruise control (109) to allow deviation between said reference speed v_{ref} and said set speed vₛₑₜ,
**characterised by**
- detecting at least one particular driving situation, said detection being based on the way said driver acts when said vehicle (100) is being driven,
- if said at least one particular driving situation is detected, applying a first limitation of the permissible deviation during said at least one particular driving situation, and
- applying a second limitation of the permissible deviation during a period of time T_{A} after the end of said at least one particular driving situation has been detected, in which said period T_{A} ends when a reset condition is fulfilled or a predetermined time T_{P} after a reset condition has been fulfilled, after which it is again possible for said cruise control to allow said deviation between said reference speed v_{ref} and said set speed Vₛₑₜ.

2. A method according to claim 1, in which at least one of said first and second limitations substantially results in a traditional cruise control function in which said reference speed v_{ref} is controlled to said set speed vₛₑₜ.

3. A method according to claim 1, in which at least one of said first and second limitations prevents said reference speed v_{ref} from being lower than said set speed Vₛₑₜ.

4. A method according to claim 1, in which at least one of said first and second limitations substantially prevents said reference speed v_{ref} from being higher than said set speed vₛₑₜ.

5. A method according to any one of claims 1-4, in which said first and second limitations are substantially alike.

6. A method according to any one of claims 1-4, in which first and second limitations are not alike.

7. A method according to any of the preceding claims, in which said reset condition is any one of the following:
- detection of a lane change,
- detection of a correction of said set speed v set,
- activation of a further cruise control function,
- detection of a further particular driving situation,
- overrun of a maximum permissible time T_{MAX} for said period T_{A}, and
- detection of an input related to a reset.

8. A method according to any one of claims 1-7, in which said at least one particular driving situation comprises at least one of the following:
- overtaking,
- entry slip acceleration,
- lane change,
- queue driving, and
- driving on a road which comprises at least one steep and/or narrow bend.

9. A method according to any one of claims 1-8, in which said at least one particular driving situation is detected by using at least one of the following parameters:
- combination of location information with map data information,
- comparison of indicated set speed vₛₑₜ with a reference speed v_{ref} and said vehicle's actual speed,
- use of flashers,
- comparison of whether a speed demanded from an acceleration control is greater than or equal to said reference speed v_{ref},
- comparison between steering wheel deflection and curvature of corresponding road section,
- determination of lateral movement by means of location information,
- determination of lateral movement by means of a yaw sensor,
- determination of lateral movement by means of a sideways accelerometer,
- determination of lateral movement by means of radar information,
- determination of lane change by means of lane departure warning (LDW),
- increase in the set speed vₛₑₜ,
- vehicle speed,
- variation in vehicle speed,
- foot braking applied by said driver,
- supplementary braking applied by said driver, and
- rate of change of a set speed vₛₑₜ.

10. A method according to any one of claims 1-9, in which said cruise control (109) allows said deviation between said reference speed v_{ref} and said set speed vₛₑₜ on the basis of knowledge about road sections ahead.

11. A method according to claim 10, in which said knowledge comprises at least one of the following:
- knowledge of topography,
- knowledge of road curvature,
- knowledge of prevailing traffic situation, and
- knowledge of state of road.

12. A method according to any one of claims 1-11, in which said cruise control (109) allows said deviation between said reference speed v_{ref} and said set speed vₛₑₜ on the basis of running resistance of said vehicle (100).

13. A computer programme which comprises programme code and which, when said programme code is executed in a computer, causes said computer to apply a method according to any one of claims 1-12.

14. A computer programme product comprising a computer- readable medium and a computer programme according to claim 13, which programme is contained in said computer-readable medium.

15. A system for control of a cruise control (109), whereby said cruise control (109) is arranged to supply a reference speed v_{ref} for control of a propulsion system (101), said reference speed v ref is based on a set speed vₛₑₜ chosen by a driver of a vehicle (100) provided with said propulsion system (101), and said cruise control (109) is arranged to be able to allow deviation between said reference speed v_{ref} and said set speed vₛₑₜ,
**characterised by**
- a detection means adapted to detecting at least one particular driving situation, said detection being based on the way said driver acts when driving said vehicle (100), and
- a limitation means adapted to applying a first limitation of the permissible deviation during said at least one particular driving situation, if said at least one particular driving situation is detected, and to applying a second limitation of the permissible deviation during a period of time T_{A} after the end of said at least one particular driving situation has been detected, in which said period T_{A} ends when a reset condition is fulfilled or a predetermined time T_{P} after a reset condition has been fulfilled, after which it is again possible for said cruise control to allow said deviation between said reference speed v_{ref} and said set speed vₛₑₜ

16. A vehicle (100) **characterised by** comprising
- a cruise control (109) and
- a system according to claim 15 which is arranged to control said cruise control (109).

## Patentansprüche

1. Verfahren zur Steuerung einer Geschwindigkeitsreglung (109), wobei die Geschwindigkeitsreglung (109) eine Referenzgeschwindigkeit v_{ref} zur Steuerung eines Antriebssystems (101) liefert, wobei die Referenzgeschwindigkeit v_{ref} auf einer eingestellten Geschwindigkeit vₛₑₜ basiert, die von einem Fahrer eines mit dem Antriebssystem (101) versehenen Fahrzeugs (100) eingestellt wird, und es für die Geschwindigkeitsreglung (109) möglich ist, eine Abweichung zwischen der Referenzgeschwindigkeit v_{ref} und der eingestellten Geschwindigkeit vₛₑₜ zuzulassen, **gekennzeichnet durch**
- Erfassen mindestens einer bestimmten Fahrsituation, wobei die Erfassung auf der Art und Weise basiert, wie der Fahrer sich verhält, wenn das Fahrzeug (100) gefahren wird,
- wenn die mindestens eine bestimmte Fahrsituation erkannt wird, Anwendung einer ersten Begrenzung der zulässigen Abweichung während der mindestens einen bestimmten Fahrsituation, und
- Anwenden einer zweiten Begrenzung der zulässigen Abweichung während einer Zeitspanne T_{A}, nachdem das Ende der mindestens einen bestimmten Fahrsituation festgestellt wurde, wobei die Zeitspanne *T_{A}* endet, wenn eine Rücksetzbedingung erfüllt ist, oder eine vorbestimmte ZeitTp, nachdem eine Rücksetzbedingung erfüllt ist, wobei es der Geschwindigkeitsreglung danach wieder möglich ist, die Abweichung zwischen der Referenzgeschwindigkeit v_{ref} und der eingestellten Geschwindigkeit vₛₑₜ zuzulassen.

2. Verfahren nach Anspruch 1, bei dem mindestens eine der ersten und zweiten Begrenzungen im Wesentlichen zu einer traditionellen Geschwindigkeitsregelungsfunktion führt, bei der die Referenzgeschwindigkeit v_{ref} auf die eingestellte Geschwindigkeit vₛₑₜ geregelt wird.

3. Verfahren nach Anspruch 1, bei dem mindestens eine der ersten und zweiten Begrenzungen verhindert, dass die Referenzgeschwindigkeit v_{ref} niedriger ist als die eingestellte Geschwindigkeit vₛₑₜ.

4. Verfahren nach Anspruch 1, bei dem mindestens eine der ersten und zweiten Begrenzungen im Wesentlichen verhindert, dass die Referenzgeschwindigkeit v_{ref} höher als die eingestellte Geschwindigkeit vₛₑₜ ist.

5. Verfahren nach einem der Ansprüche 1-4, bei dem die erste Begrenzung und die zweite Begrenzung im Wesentlichen gleich sind.

6. Verfahren nach einem der Ansprüche 1-4, bei dem die erste Begrenzung und die zweite Begrenzung nicht gleich sind.

7. Verfahren gemäß einem der vorhergehenden Ansprüche, bei dem die Rücksetzbedingung eine der folgenden ist:
- Erfassen eines Spurwechsels,
- Erfassen einer Korrektur der eingestellten Geschwindigkeit vₛₑₜ,
- Aktivierung einer weiteren Geschwindigkeitsregelfunktion,
- Erfassen einer weiteren besonderen Fahrsituation,
- Überschreitung einer maximal zulässigen Zeit T_{MAX} für den genannten Zeitraum T_{A}, und
- Erkennung einer Eingabe im Zusammenhang mit einer Rücksetzung.

8. Verfahren nach einem der Ansprüche 1-7, bei dem die mindestens eine bestimmte Fahrsituation mindestens eine der folgenden Situationen umfasst:
- Überholen,
- Einfahrtschlupfbeschleunigung,
- Spurwechsel,
- Fahren in einer Schlange, und
- Fahren auf einer Straße, die mindestens eine steile und/oder enge Kurve aufweist.

9. Verfahren nach einem der Ansprüche 1-8, bei dem die mindestens eine bestimmte Fahrsituation unter Verwendung mindestens eines der folgenden Parameter erfasst wird:
- Kombination von Standortinformationen mit Kartendateninformationen,
- Vergleich der angezeigten Sollgeschwindigkeit vₛₑₜ mit einer Referenzgeschwindigkeit v_{ref} und der tatsächlichen Geschwindigkeit des besagten Fahrzeugs,
- Verwendung von Blinkern,
- Vergleich, ob eine von einer Beschleunigungsregelung geforderte Geschwindigkeit größer oder gleich der besagten Referenzgeschwindigkeit v_{ref} ist,
- Vergleich zwischen Lenkradauslenkung und Krümmung des entsprechenden Straßenabschnitts,
- Bestimmung der lateralen Bewegung mit Hilfe von Standortinformationen,
- Bestimmung der lateralen Bewegung mit Hilfe eines Gier-Sensors,
- Bestimmung der lateralen Bewegung mit Hilfe eines seitlichen Beschleunigungsmessers,
- Bestimmung der lateralen Bewegung mit Hilfe von Radarinformationen,
- Bestimmung des Spurwechsels mittels Spurwechselwarnung (Lane Departure Warning (LDW)),
- Erhöhung der eingestellten Geschwindigkeit vₛₑₜ,
- Fahrzeuggeschwindigkeit,
- Veränderung der Fahrzeuggeschwindigkeit,
- Fußbremsung durch den Fahrer,
- Zusatzbremsung durch den Fahrer, und
- Änderungsrate einer eingestellten Geschwindigkeit vₛₑₜ.

10. Verfahren nach einem der Ansprüche 1-9, bei dem die Geschwindigkeitsreglung (109) die Abweichung zwischen der Referenzgeschwindigkeit v_{ref} und der eingestellten Geschwindigkeit vₛₑₜ auf der Grundlage des Wissens über vorausliegende Straßenabschnitte zulässt.

11. Verfahren nach Anspruch 10, bei dem das Wissen mindestens eine der folgenden Eigenschaften umfasst:
- Kenntnis der Topographie,
- Kenntnis der Straßenkrümmung,
- Kenntnis der vorherrschenden Verkehrssituation und
- Kenntnis des Straßenzustands.

12. Verfahren nach einem der Ansprüche 1-11, bei dem die Geschwindigkeitsreglung (109) die Abweichung zwischen der Referenzgeschwindigkeit v_{ref} und der eingestellten Geschwindigkeit vₛₑₜ auf der Grundlage des Fahrwiderstands des Fahrzeugs (100) zulässt.

13. Computerprogramm, das Programmcode umfasst und das, wenn der Programmcode von einem Computer ausgeführt wird, den Computer veranlasst, ein Verfahren gemäß einem der Ansprüche 1-12 anzuwenden.

14. Computerprogrammprodukt, umfassend ein computerlesbares Medium und ein Computerprogramm nach Anspruch 13, wobei das Programm in dem computerlesbaren Medium enthalten ist.

15. System zur Steuerung einer Geschwindigkeitsreglung (109), wobei die Geschwindigkeitsreglung (109) so angeordnet ist, dass sie eine Referenzgeschwindigkeit v_{ref} zur Steuerung eines Antriebssystems (101) liefert, wobei die Referenzgeschwindigkeit v_{ref} auf einer eingestellten Geschwindigkeit vₛₑₜ basiert, die von einem Fahrer eines mit dem Antriebssystem (101) versehenen Fahrzeugs (100) gewählt wird, und die Geschwindigkeitsreglung (109) so angeordnet ist, dass sie in der Lage ist, eine Abweichung zwischen der Referenzgeschwindigkeit v_{ref} und der eingestellten Geschwindigkeit vₛₑₜ zuzulassen,
**gekennzeichnet durch**
- ein Erfassungsmittel, das dazu ausgebildet ist, mindestens eine bestimmte Fahrsituation zu erfassen, wobei die Erfassung auf der Art und Weise basiert, wie der Fahrer sich beim Führen des Fahrzeugs (100) verhält, und
- eine Begrenzungseinrichtung, die so ausgebildet ist, dass sie eine erste Begrenzung der zulässigen Abweichung während der mindestens einen bestimmten Fahrsituation anwendet, wenn die mindestens eine bestimmte Fahrsituation erfasst wird, und dass sie eine zweite Begrenzung der zulässigen Abweichung während einer Zeitspanne T_{A} anwendet, nachdem das Ende der mindestens einen bestimmten Fahrsituation erfasst wurde, wobei die Zeitspanne T_{A} endet, wenn eine Rücksetzbedingung erfüllt ist, oder eine vorbestimmte ZeitTp, nachdem eine Rücksetzbedingung erfüllt ist, wobei es der Geschwindigkeitsregelung danach wieder möglich ist, die Abweichung zwischen der Bezugsgeschwindigkeit v_{ref} und der eingestellten Geschwindigkeit vₛₑₜ zuzulassen.

16. Ein Fahrzeug (100), **dadurch gekennzeichnet, dass** es
- eine Geschwindigkeitsreglung (109) und
- ein System nach Anspruch 15 umfasst, das zur Steuerung der Geschwindigkeitsreglung eingerichtet ist (109).

## Revendications

1. Procédé de commande d'un régulateur de vitesse (109), ledit régulateur de vitesse (109) fournissant une vitesse de référence V_{ref} pour commander un système de propulsion (101), ladite vitesse de référence V_{ref} étant basée sur une vitesse définie Vₛₑₜ sélectionnée par un conducteur d'un véhicule (100) équipé dudit système de propulsion (101), et il est possible pour ledit régulateur de vitesse (109) de permettre un écart entre ladite vitesse de référence V_{ref} et ladite vitesse définie Vₛₑₜ, **caractérisé par**
- la détection d'au moins une situation de conduite particulière, ladite détection étant basée sur la manière dont ledit conducteur agit lorsque ledit véhicule (100) est conduit,
- si ladite situation de conduite particulière est détectée, l'application d'une première limite de l'écart admissible pendant ladite situation de conduite particulière, et
- l'application d'une seconde limite de l'écart admissible pendant une durée de temps T_{A} après que la fin de ladite situation de conduite particulière a été détectée, où ladite durée T_{A} se termine lorsqu'une condition prédéfinie est remplie ou une durée prédéfinie T_{P} après que la condition prédéfinie a été remplie, après quoi il est de nouveau possible pour ledit régulateur de vitesse de permettre ledit écart entre ladite vitesse de référence V_{ref} et ladite vitesse prédéfinie Vₛₑₜ.

2. Procédé selon la revendication 1, ladite première et/ou ladite seconde limite conduisant sensiblement à une fonction de régulation de vitesse classique dans laquelle ladite vitesse de référence V_{ref} est commandée par ladite vitesse Vₛₑₜ.

3. Procédé selon la revendication 1, ladite première et/ou ladite seconde limite empêchant que ladite vitesse de référence V_{ref} soit inférieure à ladite vitesse définie Vₛₑₜ.

4. Procédé selon la revendication 1, ladite première et/ou ladite seconde limite empêchant que ladite vitesse de référence V_{ref} soit supérieure à ladite vitesse définie Vₛₑₜ.

5. Procédé selon l'une quelconque des revendications 1 à 4, ladite première et ladite seconde limite étant sensiblement identiques.

6. Procédé selon l'une quelconque des revendications 1 à 4, la première et la seconde limite n'étant pas identiques.

7. Procédé selon l'une quelconque des revendications précédentes, ladite condition prédéfinie étant l'une des conditions suivantes :
- la détection d'un changement de voie de circulation
- la détection d'une correction de ladite vitesse définie Vₛₑₜ
- l'activation d'une autre fonction de régulation de vitesse,
- la détection d'une autre situation de conduite particulière,
- le dépassement d'une durée T_{MAX} maximum admissible pour ladite durée T_{A}, et
- la détection d'une entrée relative à une réinitialisation.

8. Procédé selon l'une quelconque des revendications 1 à 7, ladite situation de conduite particulière étant au moins l'une des situations suivantes :
- le dépassement,
- l'accélération dans une rampe d'accès,
- le changement de voie de circulation,
- la conduite dans une file d'attente, et
- la conduite sur une route qui comprend au moins une rampe d'accès et/ou un virage serré.

9. Procédé selon l'une quelconque des revendications 1 à 8, ladite situation de conduite particulière étant détectée par l'utilisation d'au moins l'un des paramètres suivants :
- combinaison d'informations de localisation avec des informations de données de carte,
- utilisation de feux clignotants,
- comparaison si une vitesse demandée par une commande d'accélération est supérieure ou égale à ladite vitesse de référence V_{ref},
- comparaison entre la flèche de la roue directrice et la courbure du tronçon de route correspondant,
- détermination de mouvement latéral au moyen des informations de localisation,
- détermination de mouvement latéral au moyen de capteur de lacet,
- détermination de mouvement latéral au moyen d'accéléromètres latéraux,
- détermination de mouvement latéral au moyen d'informations de radar,
- détermination de changement de voie de circulation au moyen de système de surveillance de trajectoire latérale (LDW),
- augmentation de la vitesse définie Vₛₑₜ,
- vitesse de véhicule,
- modification de la vitesse de véhicule,
- freinage au pied effectué par ledit conducteur,
- freinage supplémentaire effectué par ledit conducteur, et
- taux de changement d'une vitesse définie Vₛₑₜ.

10. Procédé selon l'une quelconque des revendications 1 à 9, ledit régulateur de vitesse (109) permettant ledit écart entre ladite vitesse de référence V_{ref} et ladite vitesse définie Vₛₑₜ sur la base de connaissance concernant les tronçons de route à venir.

11. Procédé selon la revendication 10, ladite connaissance comprenant :
- une connaissance de la topographie et/ou
- une connaissance de virage
- une connaissance de la situation routière régnante, et
- une connaissance de l'état de la route.

12. Procédé selon l'une quelconque des revendications 1 à 11, ledit régulateur de vitesse (109) permettant ledit écart entre ladite vitesse de référence V_{ref} et ladite vitesse définie Vₛₑₜ sur la base d'une résistance à l'avancement dudit véhicule (100).

13. Programme informatique qui comprend un code de programme et qui, lorsque le code de programme est exécuté dans l'ordinateur, amène ledit ordinateur à appliquer le procédé selon l'une quelconque des revendications 1 à 12.

14. Produit-programme informatique comprenant un support lisible par ordinateur et un programme informatique selon la revendication 13, ledit programme étant contenu dans ledit support lisible par ordinateur.

15. Système de commande d'un régulateur de vitesse (109), ledit régulateur de vitesse (109) étant conçu pour fournir une vitesse de référence V_{ref} pour commander un système de propulsion (101), ladite vitesse de référence V_{ref} étant basée sur une vitesse définie Vₛₑₜ sélectionnée par un conducteur d'un véhicule (100) équipé dudit système de propulsion (101), et ledit régulateur de vitesse (109) étant conçu pour être apte à permettre l'écart entre ladite vitesse de référence V_{ref} et ladite vitesse définie Vₛₑₜ,
**caractérisé par**
- un moyen de détection conçu pour détecter au moins une situation de conduite particulière, ladite détection étant basée sur la manière dont ledit conducteur agit lorsqu'il conduit ledit véhicule (100), et
- un moyen de limitation conçu pour appliquer une première limite de l'écart admissible pendant ladite situation de conduite particulière, si ladite situation de conduite particulière est détectée, et pour appliquer une seconde limite de l'écart admissible pendant une durée de temps T_{A} après que la fin de ladite situation de conduite particulière a été détectée, où ladite durée T_{A} se termine lorsqu'une condition prédéfinie est remplie ou une durée prédéfinie T_{P} après que la condition prédéfinie a été remplie, après quoi il est de nouveau possible pour ledit régulateur de vitesse de permettre ledit écart entre ladite vitesse de référence V_{ref} et ladite vitesse prédéfinie Vₛₑₜ.

16. Véhicule (100) **caractérisé en ce qu'**il comprend
- un régulateur de vitesse (109) et
- un système selon la revendication 15 qui est conçu pour commander ledit régulateur de vitesse (109).
